**Europäisches Patentamt**

(19) **European Patent Office**

**Office européen des brevets**

(11) Numéro de publication: **0 133 732**
**B1**

(12) # FASCICULE DE BREVET EUROPEEN

(45) Date de publication du fascicule du brevet:
**28.12.88**

(51) Int. Cl.⁴: **F 16 K 17/32**

(21) Numéro de dépôt: **84201151.2**

(22) Date de dépôt: **08.08.84**

(54) Dispositif de protection pour conduites d'eau.

(30) Priorité: **10.08.83 BE 2060179**

(43) Date de publication de la demande:
**06.03.85 Bulletin 85/10**

(45) Mention de la délivrance du brevet:
**28.12.88 Bulletin 88/52**

(84) Etats contractants désignés:
**AT CH DE FR GB IT LI LU NL SE**

(56) Documents cités:
**DE-A- 1 775 016**
**DE-A- 2 547 912**
**DE-C- 1 503 878**

(73) Titulaire: **STANDARD S.A., 16, Allée Marconi,
Luxembourg (LU)**

(72) Inventeur: **Van De Moortele, Guido, Oosterveldlaan 71,
B-2610 Antwerpen (Wilrijk) (BE)**

(74) Mandataire: **Ottelohe, Jozef René, Bureau Ottelohe J.R.
Postbus 3 Fruithoflaan 105, B-2600 Antwerpen
(Berchem) (BE)**

ACTORUM AG

## Description

L'invention concerne un dispositif de protection qui coupe l'adduction d'eau vers des appareils consommateurs d'eau en cas de fuite, de rupture de conduite ou de consommation imprévue d'eau.

Depuis le brevet allemand 1 503 878 comprenant les caractéristiques du préambule de la revendication 1, on connaît un dispositif de protection qui offre exclusivement une protection lorsque des variations déterminées de pression dans une conduite d'eau se produisent en cas de débit d'eau trop grand déterminé. Mais ce dispositif ne permet pas un réglage de la fermeture de l'adduction d'eau en cas de fuite, de rupture ou de consommation imprévue d'eau.

Selon l'invention un dispositif très sensible de protection a été mis au point, qui permet de couper rapidement l'adduction d'eau en cas de très faible débit d'eau comme il s'en produit en cas de fuite, de couper l'adduction d'eau après un temps déterminé réglé en cas de consommation normale d'eau et de couper d'une manière accélérée l'adduction d'eau après un débit maximum réglé comme il se produit en cas de rupture de conduite. Le dispositif de protection revient aussi automatiquement à sa position initiale en cas d'interruption de la consommation d'eau et la coupure est signalée au préalable par une importante diminution du débit. Le dispositif peut également être remis manuellement dans sa position initiale après une coupure éventuelle.

Selon la caractéristique la plus importante de l'invention, le dispositif de protection se compose des mesures de la revendication 1.

A titre d'exemple sans caractère limitatif, suit ici une description détaillée du dispositif de protection et de son fonctionnement en conformité avec l'invention. Dans celle-ci, l'action qui mène à la coupure de l'adduction d'eau en cas de débit faible ou trop faible ou moyennant un réglage ajustable, est appelée la phase opérationnelle. Est également nommée ainsi l'action qui mène à une coupure accélérée de l'adduction d'eau en cas d'un débit maximum réglable, par exemple en cas de rupture de conduite. Le retour automatique à la position initiale du dispositif en cas d'interruption de la consommation d'eau, ainsi que la remise manuelle du dispositif, sont nommés les phases de remise.

Cette description renvoie aux dessins ci-annexés, dans lesquels:

la fig. 1 représente schématiquement le dispositif de protection dans la phase de remise;

la fig. 2 représente schématiquement le dispositif de protection au début de la phase opérationnelle en cas de faible consommation d'eau ou de fuite des appareils raccordés;

la fig. 3 représente schématiquement le dispositif de protection dans la phase opérationnelle en cas de consommation normale d'eau ou de rupture dans la circulation d'eau des appareils raccordés;

la fig. 4 représente une vue de face d'une forme choisie de réalisation du dispositif de protection;

la fig. 5 en représente une vue latérale;

la fig. 6 en représente une vue d'en-haut;

la fig. 7 représente une coupe longitudinale du dispositif de protection, où la tête est tournée de 90° par rapport aux conduites d'adduction et de décharge;

la fig. 8 représente une coupe suivant la ligne VIII–VIII de la fig. 6;

la fig. 9 représente une coupe suivant la ligne IX–IX de la fig. 6;

la fig. 10 représente une coupe partielle de la partie supérieure du dispositif, la soupape de remise étant fermée.

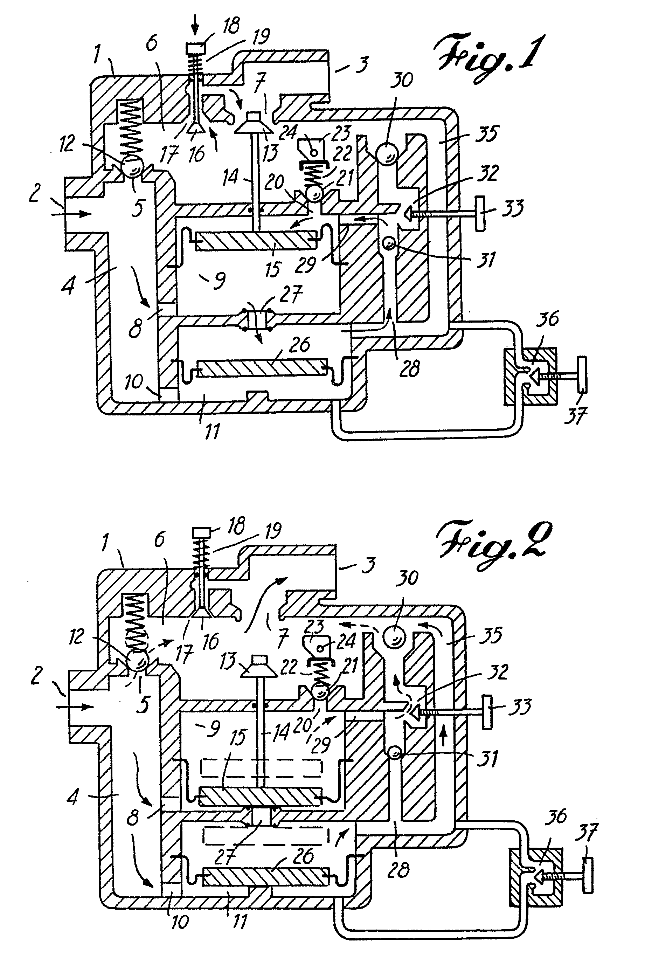

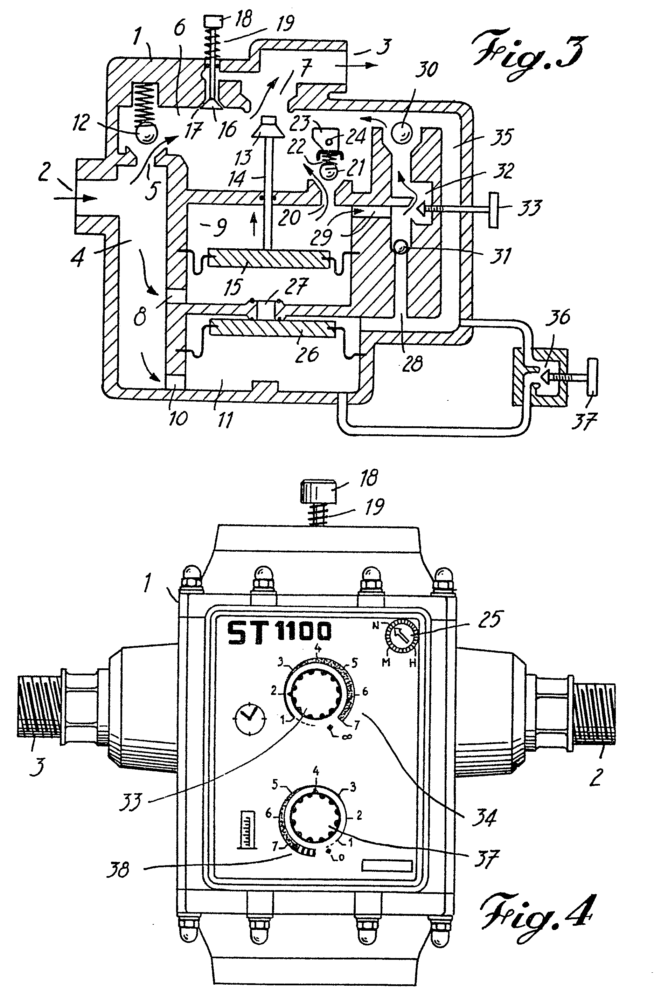

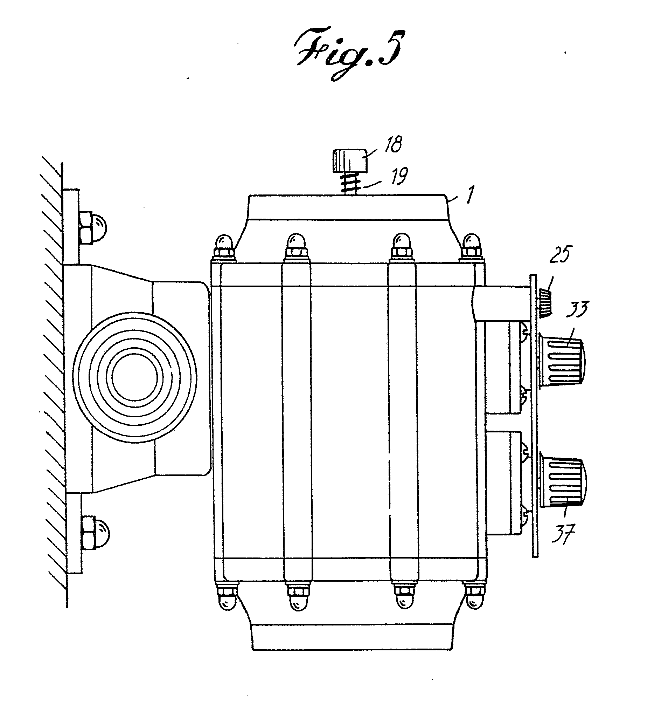

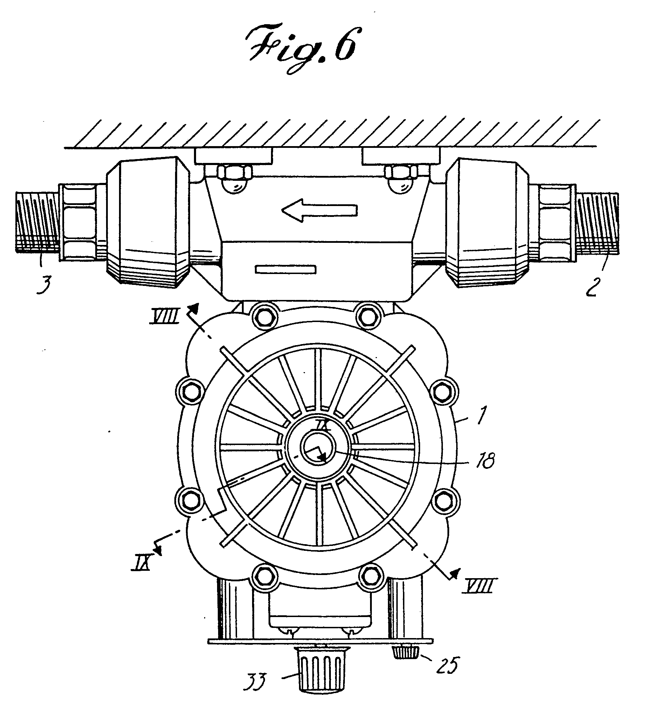

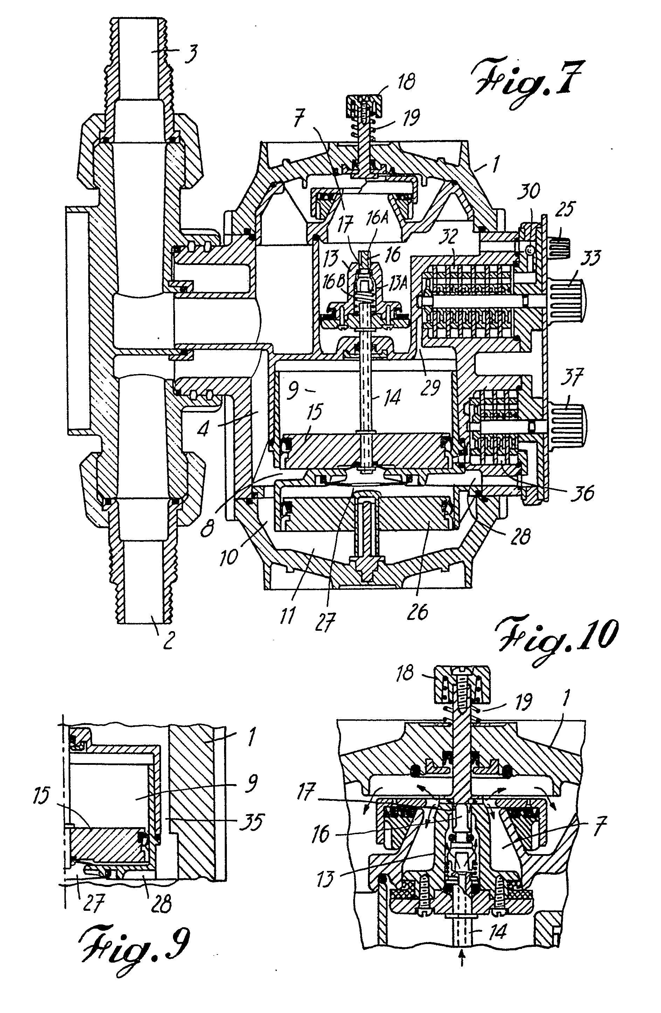

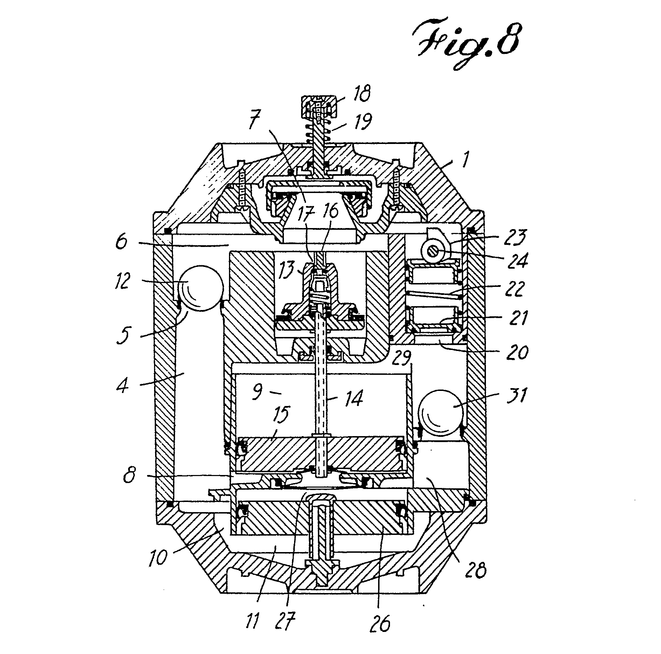

Dans ces figures on remarque que le dispositif de protection se compose d'un boîtier 1 avec une entrée 2 raccordée à une conduite d'eau et une sortie 3 à laquelle est raccordé un appareil consommateur d'eau. L'entrée 2 donne dans une chambre d'adduction 4, qui se trouve, par l'intermédiaire d'une ouverture 5, en communication avec une chambre de décharge 6, qui à son tour est en communication, par l'ouverture 7, avec la sortie 3 raccordée à la conduite d'eau qui va vers l'appareil consommateur d'eau. La chambre d'adduction 4 est également en communication, par une ouverture 8, avec la partie inférieure d'une chambre de mesure 9 et, par une ouverture 10, avec la partie inférieure d'une chambre de précontrôle 11. L'ouverture 5 entre la chambre d'adduction 4 et la chambre de décharge 6 peut être fermée au moyen d'une soupape à bille 12 qui fonctionne ou non de concert avec un ressort de pression et qui peut être ouverte sous une pression déterminée par l'eau coulant dans la chambre d'adduction 4. Comme c'est représenté dans les fig. 1 à 3, l'ouverture 7 prévue entre la chambre de décharge 6 et la sortie 3 du boîtier 1 peut être fermée par une soupape d'arrêt 13 montée sur une tige 14 d'une membrane 15 placée dans la chambre de mesure 9. Entre la chambre de décharge 6 et la sortie 3 du boîtier 1 une ouverture 17 fermable par une soupape de remise 16 enfonçable est également prévue. Pour cela, la soupape de remise 16 est pourvue d'un bouton-poussoir 18, et entre le boîtier 1 et ledit bouton-poussoir est placé un ressort de pression 19, qui maintient normalement fermée la soupape de remise. Cette soupape de remise sert à rendre le dispositif à nouveau prêt à l'emploi quand la soupape d'arrêt 13 a coupé l'adduction d'eau. Dans la forme de réalisation représentée dans les fig. 4 à 10, la soupape d'arrêt 13 déplaçable en hauteur est montée sur une tige creuse 14, grâce à quoi la chambre de mesure 9 est mise en communication avec un espace 13A prévu dans la soupape d'arrêt, espace qui est en communication avec la sortie 3. Cette ouverture 17 est toutefois fermable moyennant la soupape de remise 16 y axialement déplaçable et pourvue le long de sa circonférence de plusieurs ouvertures longitudinales 16A, qui, dans une position déterminée de la soupape de remise 16, libère son ouverture 17. Cette soupape est maintenue en position fermée par un ressort de pression 16B placé dans l'espace 13A. Le bouton-poussoir 18 y est placé centralement et fonctionne, dans une position déterminée de la soupape d'arrêt 13, de concert avec la soupape de remise 16. Entre la chambre de décharge 6 et la chambre de mesure 9 est prévue une ouverture 20 fermée par une soupape réglable 21. Cette soupape est maintenue fermée par un ressort de pression 22, dont la pression est réglable au moyen d'une came rotative 23 fixée sur un pivot 24. Sur ce pivot est fixé un bouton de réglage 25, grâce auquel une consommation prévisible normale, moyenne ou élevée d'eau peut être réglée une fois suivant le nombre des consommateurs ou des appareils consommateurs d'eau raccordés à la conduite. Grâce à ce dispositif on peut déterminer d'avance à quel débit l'appareil coupera d'une manière accélérée l'adduction d'eau. Dans la chambre de précontrôle 11 est prévue une membrane de précontrôle 26 pour ouvrir et fermer l'ouverture 27 prévue entre la chambre de précontrôle 11 et la chambre de mesure 9 qui correspondent à une équation déterminée, par quoi l'ouverture 27 est fermée au début de la phase opérationnelle et cette ouverture n'est ouverte qu'à la phase de remise. La partie supérieure de la chambre 11 est reliée, par l'intermédiaire d'une canalisation 28 et d'une ouverture 29, à la partie supérieure de la chambre de mesure 9. Dans la canalisation 28 se trouve une soupape 31 pour laisser passer de l'eau pendant la phase de remise. Entre la chambre de décharge 6 et la partie supérieure de la chambre de mesure 9 se trouvent une soupape à bille 30 et un moyen de réglage 32 du débit avec un bouton de réglage 33 au moyen duquel on règle l'écoulement de l'eau hors de la chambre de mesure 9, au-dessus de la membrane de mesure 15, de sorte que l'eau sort plus vite ou plus lentement de la chambre de mesure 9 par l'ouverture 29 et que par conséquent la vitesse est déterminée à laquelle la membrane 15 monte dans la chambre de mesure 9 et la soupape d'arrêt 13 fermera l'ouverture 7. Sur l'échelle 34 du dispositif sont reproduits des chiffres qui correspondent en pratique à une consommation d'eau de 2 à 7 minutes, après quoi le dispositif coupera l'adduction d'eau. Une deuxième canalisation 35 est prévue entre la chambre de décharge 6 et la partie supérieure de la chambre 11 pour vider cette chambre au commencement de la phase opérationnelle. Entre la chambre d'adduction 4 et la partie inférieure de la chambre de mesure 9 et la chambre de précontrôle 11 d'une part et la chambre de décharge 6 d'autre part, est prévu un régulateur de débit 36 avec bouton de réglage 37, moyennant quoi le débit du dispositif peut être réglé. Une échelle 38 est prévue pour tourner le bouton de réglage 37 dans la position voulue. Le moyen de réglage 32 du débit et le régulateur de débit 36 se composent chacun d'une série de disques fixes placés transversalement dans un boîtier et ayant une ouverture de passage et entre eux une série de disques à labyrinthe montés sur un axe rotatif, comme il est décrit dans une autre demande de brevet de la demanderesse. En tournant l'axe, on peut tourner toutes les ouvertures de passage sur une même ligne droite, de sorte que le chemin à parcourir par l'eau est le plus petit et le débit est le plus grand, ou les disques à labyrinthe peuvent être tournés de manière que toutes les ouvertures de passage des disques fixes débouchent dans les canalisations à labyrinthe des disques à labyrinthe, par quoi le chemin à parcourir par l'eau et par conséquent le débit sont réglables.

Un très bon résultat est obtenu quand la membrane 26, la soupape 31, la membrane 15 et les soupapes 30–12–21 provoquent une différence de pression dont l'importance correspond à l'équation suivante: $0 < dp\ (dp\ 15 - dp\ 31) \leq dp\ 26 < dp\ (dp\ 15 + dp\ 30) \leq dp\ 12 \ll dp\ 21$.

Dans celle-ci «dp» signifie la différence de pression et les chiffres sont les références par lesquelles les pièces détachées sont désignées dans le dessin. Le signe $\ll$ indique que le terme à la gauche du signe est beaucoup plus petit que celui à la droite du signe, et le signe $\leq$ indique que le terme à gauche du signe est plus petit ou égal au terme à la droite du signe.

Lorsque le dispositif est raccordé à la conduite d'eau, selon le nombre de consommateurs d'eau ou le nombre d'appareils consommateurs d'eau, le bouton de réglage 25 est tourné sur «N» – consommation normale d'eau, «M» – consommation moyenne d'eau, ou «H» – grande consommation d'eau (fig. 4), par quoi la came 23 va exercer la pression adéquate sur le ressort de pression 22 et la soupape 21 ne sera ouverte que sous une différence de pression déterminée. Grâce à cela l'eau coule, avec un débit déterminé en fonction du réglage de la pression du ressort 22 sur la soupape 21, directement de la partie de la chambre de mesure 9 qui se trouve au-dessus de la membrane 15 vers la chambre de décharge 6 sans que le volume du débit soit limité par le moyen de réglage du débit. La soupape d'arrêt 13 fermera, de ce fait, plus vite l'ouverture 7 et la sortie de l'eau. Ensuite le bouton de réglage 33 du moyen de réglage 32 du débit est tourné dans une position qui correspond à un temps d'utilisation déterminé, par exemple entre 2 et 7 minutes, après quoi en tout cas le dispositif coupera l'adduction d'eau dans le délai fixé. En même temps on tourne le bouton de réglage 37 du régulateur de débit 36 dans la position voulue, par quoi le démarrage est déterminé et donc aussi le débit qui doit couler à travers le dispositif sans que celui-ci y réagisse. Le dispositif revient automatiquement à la phase de remise quand l'adduction d'eau est interrompue. Ceci se produit par le fait que la pression dans la sortie 3 et au-dessus de la membrane de précontrôle 26 devient presque aussi forte que la pression dans l'entrée 2. De ce fait, la membrane de précontrôle 26 descend dans la chambre 11 et l'eau coule de l'entrée 2 par la chambre d'adduction 4, l'ouverture 8 et l'ouverture 27 maintenant ouverte, dans la partie supérieure de la chambre de précontrôle 11 et coule ensuite par la canalisation 28, la soupape 31 ouverte par la pression d'eau et l'ouverture 29 dans la partie supérieure de la chambre de mesure 9. Puisque la pression au-dessus et en-dessous de la membrane de mesure 15 devient pratiquement égale, moins la perte de pression dans la soupape 31, la membrane de mesure 15 descend jusqu'à ce que l'ouverture 27 soit fermée, par quoi le dispositif revient rapidement dans sa position initiale.

Lorsque l'adduction d'eau est interrompue par la soupape d'arrêt 13, le dispositif ne peut, comme il est indiqué dans les fig. 4 à 10, être ramené dans la phase de remise qu'en poussant le bouton-poussoir 18, qui à son tour pousse la soupape de remise 16, par quoi cette soupape de remise laisse passer de l'eau par la tige creuse 14 et la pression au-dessus et en-dessous de la soupape devient égale. Après cela, la soupape et la membrane de mesure 15 qui y est reliée peuvent revenir comme il est décrit ci-dessus dans la position initiale.

Quand, par exemple, seulement une quantité minime d'eau est consommée ou qu'un des appareils consommateurs d'eau raccordés a une fuite, il se produit une petite différence de pression entre l'entrée 2 et la sortie 3. De ce fait la pression dans le dispositif ne sera pas assez forte pour ouvrir la soupape à bille 12 et la soupape 21. Dans ce cas, l'eau coulant dans la chambre d'adduction 4 va par les ouvertures 8 et 10 dans la chambre de mesure 9. Par suite de cela, la membrane de précontrôle 26, qui a la plus faible résistance, va monter, par quoi la partie supérieure de la chambre de précontrôle 11 se vide par la canalisation 35, et l'ouverture 27 est fermée. Ensuite la membrane 15, ayant une résistance un peu plus forte que celle de la membrane de précontrôle 26, commence à monter, par quoi la partie supérieure de la chambre de mesure 9 se vide par l'ouverture 29, le moyen de réglage du débit 32, la soupape à bille 30 ouverte par la poussée, la chambre de décharge 6, l'ouverture 7 et la sortie 3. Après la montée de la membrane 15 et la vidange de la chambre de mesure 9, la soupape d'arrêt 13 ferme l'ouverture 7 et l'adduction d'eau est interrompue. A cette occasion, la soupape à bille 12 n'est pas ouverte par le faible débit. En cas de consommation très faible il est toujours supposé que cette consommation est plus grande que le débit réglé par le régulateur de débit 36. En cas de prise d'eau normale il se produit toutefois une plus grande différence de pression entre l'entrée 2 et la sortie 3 du dispositif que c'est le cas pour une faible prise d'eau ou une fuite dans un des appareils raccordés. Dans ce cas, lorsque la membrane de précontrôle 26 avec la moindre résistance a fermé l'ouverture 27 entre la chambre de mesure 9 et la chambre de précontrôle 11 et qu'entretemps également la membrane 15 dans la chambre de mesure 9 monte, en même temps la soupape à bille 12 sera ouverte par la plus forte pression, comme le représente la ligne interrompue dans la fig. 2. De ce fait, l'eau va couler rapidement de la chambre d'adduction 4, de l'ouverture 5, de la chambre de décharge 6 et de l'ouverture 7 vers la sortie 3. Après un temps réglé par le moyen de réglage du débit 32, la soupape d'arrêt 13 fermera l'ouverture 7 par suite de l'adduction d'eau. Si avant la fermeture la consommation ou la prise d'eau cesse, l'appareil viendra automatiquement dans les conditions de la phase de remise et reprendra à nouveau la position initiale, comme il est décrit ci-dessus, après quoi une même consommation est de nouveau possible sans empêchement.

En cas de rupture dans le circuit d'eau d'un des appareils raccordés, la différence de pression entre l'entrée 2 et la sortie 3 devient si grande qu'également la soupape 21 libère l'ouverture 20. Le fonctionnement du dispositif est le même qu'en cas de prise normale d'eau, sauf que par suite de la grande différence de pression la vidange de la chambre de mesure 9 se produit d'une manière accélérée par l'ouverture 20 qui est libérée par le levage de la soupape 21 et que la vidange de la chambre de mesure 9 n'est pas limitée par le moyen de réglage du débit 32. La membrane 15 monte donc très vite par suite de la pression exercée par l'eau qui entre dans la partie inférieure de la chambre de mesure 9. La soupape d'arrêt 13 montée sur la membrane 15 fermera donc très vite l'ouverture 7 prévue ente la chambre de décharge 6 et la sortie 3 et coupera par conséquent l'adduction d'eau, par quoi un dommage est prévenu. Pour pouvoir prendre de nouveau de l'eau après réparation de la rupture, la soupape de remise 16 peut être poussée par le bouton-poussoir 18, par suite de quoi tout le dispositif est de nouveau prêt à l'emploi.

Il va de soi que la forme, les dimensions et le placement réciproque des pièces détachées décrites ci-dessus peuvent varier et que même certaines de ces pièces détachées pourraient être remplacées par d'autres qui visent un même but.

## Revendications

1. Dispositif de protection pour conduites d'eau se composant principalement d'un boîtier (1) avec une entrée (2) raccordée à une conduite d'adduction d'eau et avec une sortie (3) raccordée à une conduite de décharge d'eau, dans le boîtier (1) une chambre d'adduction (4) qui est en communication avec une chambre de décharge (6) qui donne sur la sortie (3), une soupape d'arrêt (13) placée entre la chambre de décharge (6) et la sortie (3) laquelle soupape d'arrêt fait partie d'une membrane (15), une soupape (31) pour la fermeture d'une canalisation (28) et un régulateur de débit (36) pour le réglage du débit dans la liaison de circuit du dispositif, caractérisé par le fait que la chambre d'adduction (4) est également en communication avec une chambre de mesure (9) et une chambre de précontrôle (11) et qu'il est prévu une soupape (12) placée entre les chambres d'adduction et de décharge (4–6), ladite membrane (15) étant placée dans la chambre de mesure (9), une soupape de remise (16) enfonçable placée dans la chambre de décharge (6) pour la mise sous pression de la sortie (3) et l'ouverture de la soupape d'arrêt (13), un bouton-poussoir (18) pour pousser la soupape de remise (16), une soupape réglable (21) placée entre la chambre de décharge (6) et la partie supérieure de la chambre de mesure (9) pour le réglage de la consommation d'eau voulue, une membrane de précontrôle (26) placée dans la chambre de précontrôle (11) pour la fermeture d'une ouverture (27) prévue entre cette chambre de précontrôle et la chambre de mesure (9), ladite canalisation (28) étant prévue entre la chambre de décharge (6) et la chambre de précontrôle (11), une canalisation (35) prévue entre la chambre de décharge (6) et la chambre de précontrôle (11), une ouverture (29) prévue entre la chambre de mesure (9) et la canalisation (28), ladite soupape (31) étant placée entre la chambre de précontrôle (11) et l'ouverture (29) de la chambre de mesure (9), un moyen de réglage (32) pour régler le débit entre la chambre de mesure (9) et la chambre de décharge (6) et pour régler la vitesse de fermeture de la soupape d'arrêt (13), et ledit régulateur de débit (36) étant placé entre la chambre de précontrôle (11) et la chambre de décharge (6).

2. Dispositif de protection selon la revendication 1, caractérisé par le fait que la soupape d'arrêt (13) est fixée sur une tige creuse (14) sur laquelle est également montée la membrane (15) et à travers laquelle la tige creuse passe, ladite soupape d'arrêt a d'une part un espace (13A) dans lequel la tige creuse débouche et ladite soupape de remise (16) est montée et d'autre part une ouverture (17) à travers laquelle la soupape de remise (16) passe vers l'extérieur, un ressort de pression (16B) est placé dans l'espace (13A) pour maintenir la soupape de remise dans l'ouverture (17) dans la position fermée, des ouvertures longitudinales (16A) sont prévues dans la soupape de remise (16) pour mettre dans sa position enfoncée l'espace (13A) de la soupape de remise (16) en communication avec la chambre de décharge (6), et ledit bouton-poussoir (18) avec ressort de pression (19) est placé axialement au-dessus de la soupape de remise (16) pour la mettre en position ouverte.

3. Disposition de protection selon la revendication 1, caractérisé par le fait que la soupape réglable (21) possède un ressort de pression (22) pour la fermer, une came (23) tournant autour d'un pivot (24) pour régler la pression du ressort et un bouton de réglage (25) pour amener ladite came (23) dans plusieurs positions.

4. Dispositif de protection selon la revendication 1, caractérisé par le fait que le moyen de réglage (32) et le régulateur du débit (36) est un régulateur de débit constant avec échelle horaire (34).

5. Dispositif de protection selon la revendication 1, caractérisé par le fait qu'entre le moyen de réglage (32) et la chambre de décharge (6) une soupape à bille (30) est prévue, dont le poids spécifique s'approche de celui du fluide, de sorte qu'il n'y a pratiquement pas de différence de pression au-dessus et en-dessous de ladite soupape.

6. Dispositif de protection selon la revendication 1, caractérisé par le fait que la membrane de précontrôle (26), la soupape (31), la membrane (15) et les soupapes (30–12–21) provoquent une différence de pression dont la grandeur satisfait à l'équation suivante:

$$0 < dp\,(dp\,(15) - dp\,(31)) \leq dp\,(26) < dp\,(dp\,(15) + dp\,(30)) \leq dp\,(12) \ll dp\,(21).$$

## Claims

1. Protective device for water pipes consisting primarily of a box (1) with a inlet (2) connection to a water supply pipe and with an outlet (3) connected to a water delivery pipe, in the box (1) an inlet chamber (4) which communicates with a delivery chamber (6) which leads to the outlet (3), a cut-off valve (13) located between the delivery chamber (6) and the outlet (3) which cut-off valve forms part of a membrane (15), a valve (31) for shutting off a channel (28) and a flow rate controller (36) for controlling the rate of flow in the connection circuit of the device, characterized by the fact that the inlet chamber (4) also communicates with a measuring chamber (9) and a pre-control chamber (11) and that it is provided with a valve (12) located between the inlet and delivery chambers (4–6), said membrane (15) being located in the measuring chamber (9) a push-down reset valve (16) located in the delivery chamber (6) for admitting pressure to the outlet (3) and the opening of the cut-off valve (13), a knob (18) for pushing the reset valve (16), a controllable valve (21) located between the delivery chamber (6) and the upper part of the measuring chamber (9) for adjusting the desired water consumption, a pre-control membrane (26) located in the pre-control chamber (11) for closing an opening (27) provided between the pre-control chamber and the measuring chamber (9), said channel (28) being provided between the discharge chamber (6) and the pre-control chamber (11), a channel (35) provided between the discharge chamber (6) and the pre-control chamber (11), an opening (29) provided between the measuring chamber (9) and the channel (28), said valve (31) being located between the pre-control chamber (11) and the opening (29) of the measuring chamber (9), means of control (32) for controlling the rate of flow between the measuring chamber (9) and the delivery chamber (6) and for controlling the closing speed of the cut-off valve (13), said flow rate controller (36) being located between the pre-control chamber (11) and the delivery chamber (6).

2. Protective device as claimed in claim 1, characterized by the fact that the cut-off valve (13) is fixed on a hollow rod (14) on which the membrane (15) is mounted and through which the hollow rod passes, said cut-off valve has at one side a space (13A) in which the hollow rod emerges and said reset valve (16) is mounted and on the other side an opening (17) through which the reset valve (16) passes to the outside, a pressure spring (16B) is located in the space (13A) in order to keep the reset valve in the opening (17) in the shut position, longitudinal openings (16A) are provided in the reset valve (16) so that when it is in the pushed-down position the space (13A) of the reset valve (16) is connected to the delivery chamber (6), and the said knob (18) with the pressure spring (19) is axially located on top of the reset valve (16) in order to restore it to the open position.

3. Protective device as claimed in claim 1, characterized by the fact that the adjustable valve (21) is provided with a pressure spring (22) in order to close it, a cam (23) which turns on a pivot (24) to adjust the pressure of the spring and a control knob (25) to set the cam (23) in various positions.

4. Protective device as claimed in claim 1, characterized by the fact that the means of control (32) and the flow rate controller (36) is a constant rate controller with a scale calibrated in hours (34).

5. Protective device as claimed in claim 1, characterized by the fact that between the means of control (32) and the delivery chamber (6) a ball valve (30) is provided, the specific gravity of which approaches that of the fluid, so that there is virtually no pressure difference above and below said valve.

6. Protective device as claimed in claim 1, characterized by the fact that the pre-control membrane (26), the valve (31), the membrane (15) and the valves (30–12–21) induce a pressure difference the magnitude of which satisfies the following equation:
$$0 < dp\,(dp\,(15) - dp\,(31)) \le dp\,(26) < dp\,(dp\,(15) + dp\,(30)) \le dp\,(12) \ll dp\,(21).$$

## Patentansprüche

1. Schutzvorrichtung für Wasserleitungen, im wesentlichen bestehend aus einem Gehäuse (1) mit einem an eine Wasserzufuhrleitung angeschlossenen Eingang (2) und einem an eine Wasserabfuhrleitung angeschlossenen Ausgang (3), einer im Gehäuse (1) angeordneten, mit einer zum Ausgang (3) führenden Entlastungskammer (6) in Verbindung stehenden Zufuhrkammer (4), einem zwischen dieser Entlastungskammer (6) und dem Ausgang (3) angeordneten, an einer Membran (15) befestigten Sperrventil (13), einem Ventil (31) für das Abschliessen eines Kanals (28) und einem Durchflussregler (36) für die Durchflussregelung in der Kreislaufverbindung der erfindungsgemässen Vorrichtung, dadurch gekennzeichnet, dass die vorgenannte Zufuhrkammer (4) ausserdem mit einer Messkammer (9) und einer Vorkontrollkammer (11) in Verbindung steht und dass zwischen dieser Zufuhrkammer (4) und dieser Entlastungskammer (6) ein Ventil (12) angeordnet ist, wobei die vorgenannte Membran (15) in der Messkammer (9) montiert ist, dass ein eindrückbares Rückstellventil (16) zwecks Druckbeaufschlagung des Ausganges (3) und der Öffnung des Abschlussventils (13) in der Entlastungskammer (6) vorgesehen ist, und die Vorrichtung weiter versehen ist mit einem Druckknopf (18) für die Betätigung des vorgenannten Rückstellventils (16), einem regelbaren, zwischen der Entlastungskammer (6) und dem Oberteil der Messkammer (9) angeordneten Ventil (21) für die Einstellung des erwünschten Wasserverbrauches, einer Vorkontrollmembran (26) in der Vorkontrollkammer (11) für das Schliessen einer Öffnung (27) zwischen dieser Vorkontrollkammer (11) und der Messkammer (9), wobei der vorgenannte Kanal (28) zwischen der Entlastungskammer (6) und der Vorkontrollkammer (11) angeordnet ist, einem Kanal (35) zwischen der Entlastungskammer (6) und der Vorkontrollkammer (11), einer Öffnung (29) zwischen der Messkammer (9) und dem Kanal (28), wobei das vorgenannte Ventil (31) zwischen der Vorkontrollkammer (11) und der Öffnung (29) der Messkammer (9) angeordnet ist, und einem Regler (32) für die Durchflussregelung zwischen der Messkammer (9) und der Entlastungskammer (6) und die Reglung der Schliessgeschwindigkeit des vorgenannten Sperrventils (13), wobei der vorgenannte Durchflussregler (36) zwischen der Vorkontrollkammer (11) und der Entlastungskammer (6) angeordnet ist.

2. Schutzvorrichtung gemäss dem Anspruch 1, dadurch gekennzeichnet, dass das vorgenannte Sperrventil (13) auf einem ebenfalls die Membran (15) tragenden und durch die Membran hindurchgehenden Hohlstiel (14) befestigt ist und das Sperrventil (13) einerseits einen Raum (13A), in den der vorgenannte Hohlstiel (14) ausmündet und worin das Rückstellventil (16) angeordnet ist, und anderseits eine Öffnung (17), wodurch das Rückstellventil (16) nach aussen hinaussteckt, aufweist; im vorgenannten Raum (13A) des Sperrventils (13) eine das Rückstellventil (16) in seiner Schliesslage in der Öffnung (17) haltende Druckfeder (16B) angeordnet ist; das Rückstellventil (16) mit Längsöffnungen (16A) versehen ist, deren Aufgabe es ist in eingedrückten Stand den Raum (13A) desselben in Verbindung mit der Entlastungskammer (6) zu stellen; und der vorgenannte, mit einer Druckfeder (19) ausgestattete Druckknopf (19) achsial oberhalb des Rückstellventils (16) angeordnet ist um es in seiner Öffnungslage zu setzen.

3. Schutzvorrichtung gemäss dem Anspruch 1, dadurch gekennzeichnet, dass das regelbare Ventil (21) mit einer Druckfeder (22) zum Schliessen desselben, einem um eine Spindel (24) drehenden Nocken (23) zum Regeln des Druckes der Druckfeder und einem Druckknopf (25) für die Einstellung des vorgenannten Nockens (23) in verschiedenen Lagen versehen ist.

4. Schutzvorrichtung gemäss dem Anspruch 1, dadurch gekennzeichnet, dass der Regler (32) und der Durchflussregler (36) bestehen aus eine Stetigdurchflussregelvorrichtung mit Zeitskala (34).

5. Schutzvorrichtung gemäss dem Anspruch 1, dadurch gekennzeichnet, dass zwischen dem Regler (32) und der Entlastungskammer (6) ein Kugelventil (30) angeordnet ist, dessen spezifischen Gewichtes ungefähr der des betreffenden Fluidums entspricht, demzufolge der oberhalb und unterhalb dieses Kugelventils herrschende Druckunterschied praktisch null ist.

6. Schutzvorrichtung gemäss dem Anspruch 1, dadurch gekennzeichnet, dass die Vorkontrollmembran (26), das Ventil (31), die Membran (15) und die Ventile (30, 12, 21) einen Druckunterschied verursachen, dessen Wert der folgenden Gleichung genügt:
$$0 < dp\,(dp\,(15) - dp\,(31)) \le dp\,(26) < dp\,(dp\,(15) + dp\,(30)) \le dp\,(12) \ll dp\,(21).$$

EP 0 133 732 B1

*Fig.1*

*Fig.2*

7

*Fig.3*

*Fig.4*

# Fig.5

# *Fig.6*

*Fig.7*

*Fig.10*

*Fig.9*

Fig.8